# EUROPÄISCHE PATENTSCHRIFT

(11) **EP 1 577 079 B1**
(45) Veröffentlichungstag und Bekanntmachung des Hinweises auf die Patenterteilung: **29.04.2009**
(21) Anmeldenummer: 04024835.3
(22) Anmeldetag: 19.10.2004
(51) Int. Cl.: B29C 65/40, B05C 17/005, B29C 47/08

(54) **Handschweissgerät zum Verschweissen von Kunststoffwerkstücken**
Hand held welding tool for welding synthetic parts
Outil de soudage à main pour le soudage d'éléments en matière synthétique

(30) Priorität: 15.03.2004 DE 202004004147 U; 20.04.2004 DE 202004006405 U
(43) Veröffentlichungstag der Anmeldung: 21.09.2005
(73) Patentinhaber: Wegener International GmbH, 52074 Aachen (DE)
(72) Erfinder: Schmuck, Jan, 45145 Essen (DE)
(74) Vertreter: Paul, Dieter-Alfred

(56) Entgegenhaltungen:
- DE-A1- 1 629 748
- DE-A1- 3 341 201
- DE-C1- 3 833 677
- DE-C1- 4 119 137
- DE-U1- 20 110 173
- FR-A- 1 316 252
- JP-A- 55 022 364
- US-A- 3 314 574
- US-A- 3 750 905
- US-A- 4 078 454
- US-A- 5 244 123
- US-B1- 6 558 059
- US-B1- 6 585 135

## Beschreibung

Die Erfindung betrifft ein Handschweißgerät zum Verschweißen von Kunststoffwerkstücken mittels plastifiziertem Kunststoffmaterial, mit einer Fördereinrichtung zur Förderung des Kunststoffmaterials durch eine Plastifiziereinrichtung zu einem Schweißschuh, wobei die Fördereinrichtung von einem elektrischen Antriebsmotor über ein Getriebe angetrieben ist.

Solche Schweißgeräte sind beispielsweise aus der DE 31 31 695 A1, DE 42 36 281 C2, DE 38 35 251 A2 und des gattungsbildenden DE 41 19 137 C1 bekannt. Sie werden zum Verschweißen von Kunststoffplatten oder -rohren verwendet. Im allgemeinen weisen sie eine Antriebseinrichtung ähnlich einer Handbohrmaschine mit einem elektrischen Antriebsmotor und einem Getriebe auf, auf dessen Abtrieb ein Vorsatzgerät aufgesetzt ist. Im wesentlichen in Längsrichtung durch dieses Vorsatzgerät geht ein Durchgangskanal, der einen nach außen offenen Einzug für das Einführen eines Drahtes aus thermoplastischem Kunststoffmaterial und einen als Schweißschuh ausgebildeten Ausgang für das plastifizierte Kunststoffmaterial aufweist. Der Durchgangskanal bildet über einen wesentlichen Abschnitt eine Fördereinrichtung, in dem in den Durchgangskanal eine Förderschraube eingesetzt ist, die von der Antriebseinrichtung in Drehbewegung versetzbar ist. In einem ersten Förderabschnitt wird der Draht beim Einführen über den Eingang von der Schraubverzahnung der Förderschraube erfaßt und in axialer Richtung parallel zu deren Achse eingezogen und transportiert. Danach wird der Draht in einer Zerkleinerungseinrichtung zerstückelt, so daß er in granulierter Form in die sich anschließende Plastifiziereinrichtung eintritt. Dort setzt sich die Förderschraube in Form einer Förderschnecke in dem Durchgangskanal fort. Die Plastifiziereinrichtung ist mit einer Heizeinrichtung versehen, die den Förderkanal umgibt und für eine Erhitzung des Kunststoffmaterials auf eine solche Temperatur sorgt, daß es beim Durchlaufen durch die Plastifiziereinrichtung schmilzt und in plastifiziertem Zustand aus dem Ausgang des Durchgangskanals ausgestoßen wird.

Bei dem Handschweißgerät nach dem DE 298 18 757.4 U ist auf die Zerkleinerungseinrichtung und die Förderschnecke verzichtet worden, so daß der Draht unzerkleinert in die Plastifiziereinrichtung befördert und dort zum Schmelzen gebracht wird, wobei der noch nicht plastifizierte Drahtabschnitt wie ein Kolben auf das schon plastifizierte Kunststoffmaterial wirkt und es durch stetiges Nachrücken, bewirkt durch die Fördereinrichtung, aus dem Schweißschuh ausstößt.

Die meisten Handschweißgeräte dieser Art sind mit einer Heißlufterzeugungseinrichtung versehen, über die mittels eines Gebläses angesaugte Luft durch ein Heizelement erhitzt und dann im Bereich des Ausgangs des Durchgangskanal ausgestoßen wird, um die zu verschweißenden Kunststoffwerkstücke im Bereich der vorgesehenen Schweißnaht vorzuwärmen. In den meisten Fällen ist das Gebläse nicht Teil des Schweißgerätes, so daß die Luft über einen Schlauch von einem separaten Gebläse zu dem Heizgerät zugeführt werden muß. In der DE 41 19 137 C1 ist jedoch das als Radialgebläse ausgebildete Gebläse an der Rückseite des Handschweißgerätes angeordnet und wird von dem Antriebsmotor über eine Welle angetrieben.

Da bei den bekannten Handschweißgeräten das die Antriebseinrichtung umgebende Griffgehäuse nahezu vollständig von dem Antriebsmotor und dem Getriebe ausgefüllt wird, können Zusatzbauteile, wie insbesondere die elektrische bzw. elektronische Steuerung und Regelung des Handschweißgerätes, nicht in dem Griffgehäuse untergebracht werden. Im Stand der Technik wird deshalb auf der Oberseite der Antriebseinrichtung ein separates Steuergerät montiert, wodurch das Handschweißgerät sehr voluminös wird und die Beobachtung der Schweißstelle durch die Bedienungsperson behindert. Entsprechendes gilt auch für die Heißlufterzeugungseinrichtung, die meist ebenfalls seitlich oder oberhalb des Handschweißgerätes als separates Teil angebracht wird. Zudem haben die bekannten Handschweißgeräte eine relativ große Länge, was ihre Handhabung erschwert.

Die bekannten Handschweißgeräte werden an zwei Handgriffen gehalten, nämlich einen an der Unterseite des Griffgehäuses vorstehenden Handgriff und einen sich quer zur Plastifiziereinrichtung erstreckenden Handgriff, gehalten. Dies ist wenig ergonomisch und führt zu schneller Ermüdung der Bedienungsperson.

In der DE 201 10 173 U1 ist ein Handschweißgerät offenbart, bei dem der bisher verwendete bürstenbehaftete Kollektormotor als Antriebsmotor für die Fördereinrichtung durch einen bürsten- und kollektorlosen Asynchronmotor ersetzt worden ist, der mit einer Frequenz von mehr als 300 Hz, bevorzugt 1000 Hz betrieben wird. Hierdurch soll sich das Leistungsgewicht erheblich reduzieren. Allerdings ist zur Drehzahlsteuerung ein raumaufwendiger Frequenzumrichter notwendig, der bei der praktischen Ausführung des in der DE 201 10 173 U1 beschriebenen Handschweißgeräts in einem separaten Gehäuse untergebracht ist, das mit dem Handschweißgerät nur über ein Spezialkabel verbunden ist. Dies macht die Handhabung des Handschweißgeräts umständlich.

Der Erfindung liegt die Aufgabe zugrunde, ein Handschweißgerät der eingangs genannten Art so auszubilden, daß es wesentlich einfacher handhabbar ist und eine kompaktere Bauweise mit dem Vorteil zuläßt, daß die Bedienungsperson einen besseren Blick auf die Schweißstelle hat.

Diese Aufgabe wird erfindungsgemäß dadurch gelöst, daß der Antriebsmotor innerhalb eines Motorgehäuses unterhalb der Plastifiziereinrichtung angeordnet ist. Diese Anordnung nutzt einen bisher freien Raum und konzentriert das Gewicht auf den Bereich des Schwerpunktes des Schweißgerätes, was allein schon dessen Handhabbarkeit verbessert. Außerdem kann das Motorgehäuse zur Abstützung des Handschweißgerätes mit einer Hand benutzt werden, wobei sich auch hier vorteilhaft auswirkt, daß diese Abstützung im Bereich des Schwerpunktes liegt. Es ist nicht mehr erforderlich - wenn auch möglich -, in diesem Bereich einen seitlich quer vorstehenden Handgriff vorzusehen.

Das von dem Antriebsmotor befreite Griffgehäuse im Bereich des hinteren Endes des Handschweißgerätes kann nunmehr für die Aufnahme anderer Komponenten des Handschweißgeräts genutzt werden, beispielsweise für die Aufnahme der Elektronikkomponenten zur Steuerung und Regelung des Handschweißgeräts sowie zur Anbringung oder zum Einbau des Gebläses für die Heißlufterzeugungseinrichtung. In der Regel kann hierzu das Griffgehäuse verkürzt werden.

Insgesamt ergibt sich hierdurch ein außerordentlich kompaktes, mit den schweren Komponenten auf Bereich des Schwerpunkts konzentriertes und einfach zu handhabendes Handschweißgerät. Die Kompaktheit des Gerätes läßt eine weitgehend störungsfreie Beobachtung der Schweißstelle zu und sorgt damit ebenfalls für eine bessere Handhabung des Handschweißgerätes bis hin zu einer Förderung der Schweißqualität.

In Ausbildung der Erfindung ist vorgesehen, daß das Motorgehäuse keine direkte Berührung mit der Plastifiziereinrichtung hat, also zwischen dieser und dem Motorgehäuse ein freier Abstand vorhanden ist, so daß das Motorgehäuse nicht durch die Plastifiziereinrichtung erwärmt wird.

Das Motorgehäuse sollte eine ergonomische und damit angenehme Abstützung des Handschweißgeräts anbieten. Hierzu sollte es zumindest untenseitig gerundet sein. Dies kann beispielsweise durch eine halbzylindrische oder vollzylindrische Formgebung des Motorgehäuses geschehen, wobei sich die Längsachse des Antriebsmotors parallel zur Förderrichtung in der Plastifiziereinrichtung erstrecken sollte, Plastifiziereinrichtung und Antriebsmotor also parallel zueinander angeordnet sind. Um ein Abrutschen der Hand am Motorgehäuse zu verhindern, sollte es außenseitig eine die Griffigkeit verbessernde Oberfläche haben, beispielsweise durch Strukturierung der Oberfläche des Motorgehäuses und/oder durch dessen Beschichtung aus insbesondere Gummimaterial.

In weiterer Ausgestaltung der Erfindung ist vorgesehen, daß der Antriebsmotor mit seinem rückwärtigen, abtriebsseitigen Ende - und auch das Motorgehäuse - an dem Getriebe angeflanscht ist, so daß der Antriebsmotor zusammen mit dem Motorgehäuse auf einfache Weise ausgetauscht werden kann. Diese Anordnung erlaubt es zudem, über einen Standardflansch verschieden starke Antriebsmotoren anzubauen und damit eine Typenreihe mit unterschiedlichen Leistungen aufzubauen, ohne daß an dem Handschweißgerät ansonsten Änderungen vorgenommen werden müssen.

Ein besonders vorteilhafter Aufbau des erfindungsgemäßen Handschweißgerätes ergibt sich dann, wenn das Getriebe ein Getriebegehäuse aufweist, an dessen Vorderseite die Plastifiziereinrichtung und der Antriebsmotor mit Motorgehäuse und an dessen Rückseite ein Griffgehäuse mit einem Handgriff angebracht sind. Das Getriebe mit dem Getriebegehäuse bildet damit das zentrale Rückgrat für das Handschweißgerät, wobei durch entsprechende Standardisierung der Verbindungen der Einzelteile eine Typenreihe mit unterschiedlichen Antriebsmotoren, Plastifiziereinrichtungen und auch Griffgehäusen aufgebaut werden kann, ohne daß es hierzu größerer Anpassungsmaßnahmen bedarf. Das Getriebe kann dann so ausgelegt werden, daß es für die Übertragung der Antriebsleistungen über den gesamten Typenbereich ausreichend dimensioniert ist. Auf diese weise ergibt sich ein modularer Aufbau, der die Montage wesentlich vereinfacht und zudem die Basis bildet, möglichst viele Gleichteile für die verschiedenen Typen verwenden zu können.

Der Handgriff kann - wie üblich - an der Unterseite des Griffgehäuses angeformt sein. Aus ergonomischer Sicht vorteilhafter ist jedoch die Anordnung an der Rückseite des Griffgehäuses, da sich diese Anordnung insbesondere bei senkrechter Ausrichtung des Handschweißgerätes bewährt hat. Die Formgebung des Handgriffs kann - ebenfalls wie bekannt - nach Art eines Pistolenhandgriffs gestaltet sein. Als zweckmäßig hat sich jedoch eine Ausbildung des Handgriffs erwiesen, bei der der Handgriff oben- und untenseitig unter Bildung einer geschlossenen Grifföffnung eingefaßt ist. Auf diese weise wird die Handhabung des Handschweißgerätes sicherer. Dabei sollte der Handgriff ein in die Grifföffnung vorstehendes Schaltelement für das Ein- und Ausschalten des Antriebsmotors, gegebenenfalls auch für die Drehzahlsteuerung, aufweisen. Auf diese Weise ist das Schaltelement innerhalb der Grifföffnung gegen unbeabsichtigte Betätigung beispielsweise durch Anstoßen an einem Gegenstand, geschützt.

Wie schon oben erwähnt, bietet das Griffgehäuse durch die erfindungsgemäße Verlagerung des Antriebsmotors Platz zur Unterbringung derjenigen Komponenten, die bei den bekannten Handschweißgeräten auf oder an dem Griffgehäuse außenseitig anmontiert werden mußten und damit dessen Handhabung und den Blick auf die Schweißstelle erschwerten. Der Platz in dem Griffgehäuse kann dazu genutzt werden, die für die Steuerung und Regelung des Schweißgeräts erforderlichen Komponenten anzuordnen. Hierbei handelt es sich insbesondere um die Regelelektronik für die Beheizung der Plastifiziereinrichtung und gegebenenfalls der Heißlufterzeugungseinrichtung, um Leistungshalbleiter zum Schalten der Heizelemente und um die Drehzahlsteuerung für den Antriebsmotor. Dabei bietet es sich an, das Griffgehäuse mit Bedienungselementen, wie Bedienungsknöpfen oder einer Tastatur für die Bedienung des Handschweißgerätes zu versehen, beispielsweise auf der Oberseite des Griffgehäuses. Dort können auch Anzeigeelemente vorgesehen werden. Für den rauhen Betrieb eignet sich insbesondere eine Folientastatur.

Sofern das Handschweißgerät - wie eigentlich üblich - eine Heißlufterzeugungseinrichtung mit einem Gebläse aufweist, sollte das Gebläse dem Griffgehäuse zugeordnet sein. Sofern Platz vorhanden ist, empfiehlt es sich, das Gebläse in das Griffgehäuse zu integrieren. Ein seitlicher Anbau des Gebläses ist jedoch gleichfalls möglich. Die Art des Gebläses ist nicht entscheidend. Aus Raumgründen läßt sich jedoch ein als Radialgebläse ausgebildetes Gebläse mit einer sich quer zur Längsachse erstrekkenden Drehachse gut in das Griffgehäuse integrieren oder an dieses anbauen. Aber auch ein Axialgebläse kommt in Frage.

Nach einem weiteren Merkmal der Erfindung ist vorgesehen, daß das Gebläse mit seiner Saugseite Verbindung zum Innenraum des Motorgehäuses hat und daß das Motorgehäuse derart mit Lufteinlaßöffnungen versehen ist, daß bei Betrieb des Gebläses Ansaugluft an dem Antriebsmotor vorbeiströmt. Dabei kann die Ansaugluft entsprechende Öffnungen in dem Getriebe durchsetzen. Durch das Vorbeiströmen der Ansaugluft wird der Antriebsmotor gekühlt und gleichzeitig die Ansaugluft aufgewärmt. Der gleiche Effekt lässt sich dadurch erzielen, daß die Komponenten zur Steuerung und Regelung des Schweißgeräts an einem Kühlkörper angeordnet werden, der im Betrieb von Ansaugluft des Gebläses durchströmt ist. Solche Komponenten erzeugen nämlich im Betrieb Wärme, die abgeführt werden muß. Dies geschieht hier durch die Ansaugluft, wobei die Ansaugluft gleichzeitig erwärmt wird somit durch das Heizelement der Heißlufterzeugniseinrichtung nicht mehr so stark erhitzt werden muß mit der Folge, daß Energie eingespart wird.

Sofern das Gebläse in dem Griffgehäuse integriert ist, sollte das Gebläsegehäuse von dem Griffgehäuse gebildet sein. Hierzu empfiehlt es sich, daß das Griffgehäuse - sofern es aus Kunststoff hergestellt wird - spritzgegossen wird. Bei einem Griffgehäuse aus Metall kann mittels Druckguß eine entsprechende Formgebung erreicht werden.

In weiterer Ausgestaltung der Erfindung ist vorgesehen, daß das Getriebe einen Zahnriementrieb aufweist. Hierdurch läßt sich die Geräuschemission des Handschweißgerätes wesentlich herabsetzen, selbst wenn zusätzlich noch ein Zahnradsatz vorhanden ist. Als Antriebsmotor eignet sich vor allem ein bürstenloser Permanentmagnetmotor, der über einen Regler drehzahlgesteuert ist. Der Regler ist zweckmäßigerweise in dem Griffgehäuse eingebaut.

In der Zeichnung ist die Erfindung anhand eines Ausführungsbeispiels näher veranschaulicht. Es zeigen:
- Figur 1: die linke Seitenansicht des erfindungsgemäßen Handschweißgerätes;
- Figur 2: die rechte Seitenansicht des erfindungsgemäßen Handschweißgerätes nach Drehung der Ansicht gemäß Figur 1 um 180°;
- Figur 3: das Gebläse für die Heißlufterzeugungseinrichtung mit Elektronikkomponente von der Saugseite her gesehen;
- Figur 4: das Gebläse gemäß Figur 3 von der Druckseite her gesehen;
- Figur 5: die Seitenansicht des Handschweißgerätes gemäß den Figuren 1 und 2 in modifizierter Ausführung.

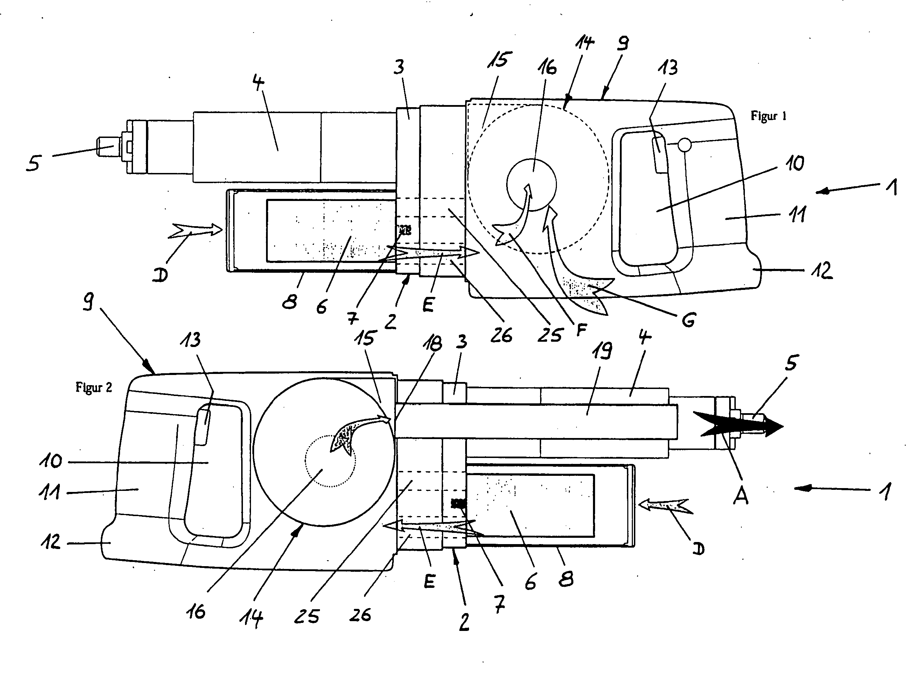

Das in den Figuren 1 und 2 dargestellte Handschweißgerät 1 weist als zentrales Teil ein Getriebe 2 mit einem Getriebegehäuse 3 auf. Das Getriebegehäuse 3 besteht aus Metall und nimmt einen Zahnradsatz sowie ein Zahnriemengetriebe auf.

An der Vorderseite des Getriebes 2 ist oben eine Plastifiziereinrichtung 4 angeflanscht, die im wesentlichen eine - gestufte - Zylinderform hat. Koaxial zur Längsachse der Plastifiziereinrichtung 4 erstreckt sich ein Durchgangskanal, in dem in üblicher Weise eine Förderschnecke angeordnet ist. Die Wandung des Durchgangskanals ist von einer Heizmanschette umgeben, die mit einer elektrischen Widerstandsheizung versehen ist und im Betrieb für die Aufheizung des durch den Durchgangskanal mittels der Förderschnecke transportierten Kunststoffmaterials bis zu dessen Plastifizierung sorgt. Das Kunststoffmaterial wird in Drahtform über eine hier nicht näher dargestellte Einzugsöffnung in die Plastifiziereinrichtung 4 eingezogen. Beim Schweißvorgang wird das in die Plastifiziereinrichtung 4 plastifizierte Kunststoffmaterial am freien, als Schweißschuh 5 ausgebildeten Ende ausgestoßen.

Ebenfalls an der Vorderseite des Getriebes 2, jedoch unterhalb der Plastifiziereinrichtung 4, ist ein Antriebsmotor 6 in Form eines elektrischen bürstenlosen Permanentmagnetmotors angeflanscht. Dessen Abtriebswelle 7 ragt in das Getriebe 2 hinein. Das Getriebe 2 überträgt die Drehbewegung der Abtriebswelle 7 nach oben auf die Förderschnecke in der Plastifiziereinrichtung 4 und sorgt dort bei Einschalten des Antriebsmotors 6 für deren Drehbewegung. Der Antriebsmotor 6 ist außenseitig von einem zylindrischen Motorgehäuse 8 umgeben, das ebenfalls an dem Getriebe 2 angeflanscht ist und an der vorderen Stirnseite Lufteintrittsöffnungen aufweist. Das Motorgehäuse 8 hat einen freien Abstand zu der Außenseite der Plastifiziereinrichtung 4.

An der Rückseite des Getriebegehäuses 3 ist ein Griffgehäuse 9 angebracht. Es besteht aus einem Kunststofformteil, das oben- und untenseitig im wesentlichen gerade ausgebildet ist. Im hinteren Bereich weist das Griffgehäuse 9 eine geschlossene Grifföffnung 10 auf, die hintenseitig von einem Handgriff 11 begrenzt wird, der beidseitig von dem Griffgehäuse 9 eingefaßt ist. Der Handgriff 11 hat hintenseitig im unteren Bereich einen Vorsprung 12, der eine zusätzliche Handstütze bildet. Im Bereich der Grifföffnung 10 steht von dem Handgriff 11 ein Betätigungsknopf 13 vor, der mit einem Schalter zum Ein-und Ausschalten des Antriebsmotors 6 versehen ist.

In das Griffgehäuse 9 integriert, wenn auch auf der rechten Seite nach außen vorstehend, ist ein Radialgebläse 14. Es hat ein Gebläsegehäuse 15, in dem ein von einem Elektromotor 16 angetriebenes Gebläserad 17 angeordnet ist. Das Gebläsegehäuse 15 ist integraler Bestandteil des Griffgehäuses 9.

An den Ausgang 18 des Gebläsegehäuses 15 schließt sich ein Luftheizrohr 19 an, das parallel und auf gleicher Höhe zu der Plastifiziereinrichtung 4 bis in die Nähe des Schweißschuhs 5 verläuft und dort in einer freien Öffnung endet. In das Luftheizrohr 19 ist eine Luftheizelement in Form einer Widerstandsheizung eingebaut, die die aus dem Radialgebläse 14 und deren Ausgang 18 ausströmende Luft aufheizt und entsprechend dem Pfeil A ausstößt.

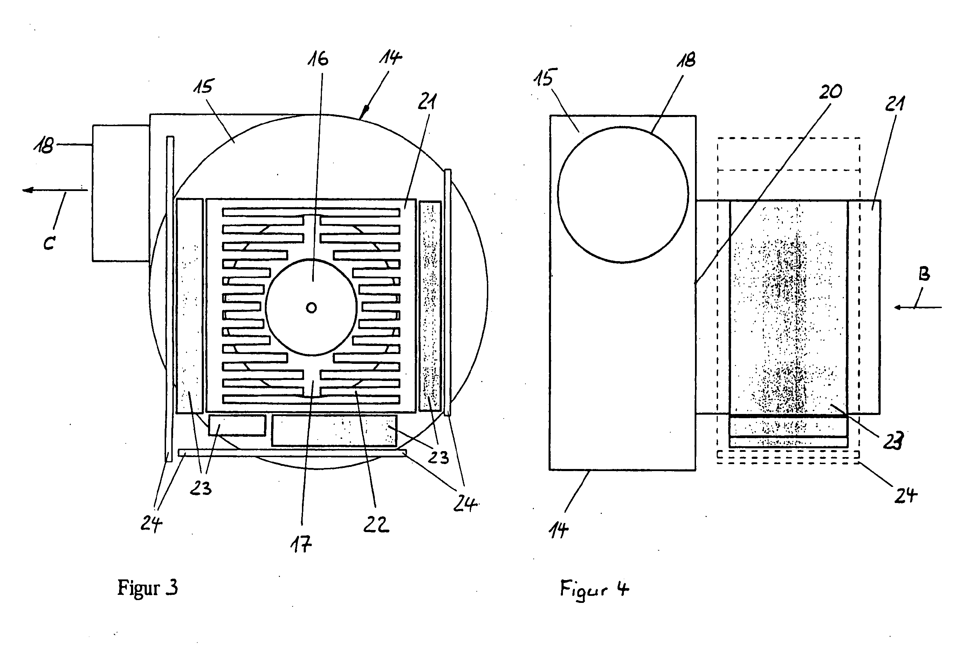

In den Figuren 3 und 4 ist das Radialgebläse 14 mit dem Gebläsegehäuse 15, dem Elektromotor 16, dem Gebläserad 17 und dem Ausgang 18 separat dargestellt. Auf die Saugseite 20 des Gebläsegehäuses 15 ist ein im Querschnitt quadratischer Kühlkörper 21 aufgesetzt, der einen Zuluftkanal für das Radialgebläse 14 bildet. Der Kühlkörper 21 besteht aus einem gut wärmeleitfähigen Material, beispielsweise Aluminium. Von den beiden sich gegenüberstehenden vertikalen Innenseiten stehen eine Vielzahl von Kühlrippen - beispielhaft mit 22 bezeichnet - vor, die bis in die Nähe des Elektromotors 16 reichen. Im Betrieb strömt die durch das Radialgebläse 14 angesaugte und demgemäß in den Kühlkörper 21 einströmende Luft (siehe Pfeil B) an den Kühlrippen 22 vorbei und wird am Ausgang 18 (siehe Pfeil C) in das Luftheizrohr 19 (Figur 2) ausgestoßen.

An den beiden Vertikalseiten und an der Unterseite des Kühlkörpers 21 sind Elektronikkomponenten in unmittelbarer Nähe zu und/oder an dem Kühlkörper 21 anliegend angeordnet. Hierbei handelt es sich vor allem um solche Elektronikkomponenten 23, die sich im Betrieb des Handschweißgerätes 1 stark erwärmen, wie beispielsweise die Leistungshalbleiter zum Schalten der Heizelemente der Plastifiziereinrichtung 4 und dem Heizelement im Luftheizrohr 19, die Temperaturregelelektronik für diese Heizelemente sowie den Regler für die Drehzahlsteuerung des Antriebsmotors 6. Die Elektronikkomponenten 23 sind auf Leiterplatten 24 montiert, die in dem Griffgehäuse 9 (vgl. Figuren 1 und 2) fixiert sind. Im Betrieb geben die Elektronikkomponenten 23 ihre Wärme an den Kühlkörper 21 ab. Die an den Kühlrippen 22 vorbeistreifende Ansaugluft nimmt die Wärme auf. Auf diese Weise werden die Elektronikkomponenten 23 gekühlt und gleichzeitig die Ansaugluft entsprechend aufgewärmt. Der Elektromotor 16 ragt in den Kühlkörper 21 hinein, so daß auch er von der Ansaugluft umströmt und die von ihm erzeugte Wärme an die Ansaugluft abgeführt wird.

Wie wiederum aus den Figuren 1 und 2 zu ersehen ist, ist der Innenraum des Motorgehäuses 8 über Durchströmkanäle 25, 26 in dem Getriebe 2 mit dem Innenraum des Griffgehäuses 9 verbunden. Im Betrieb wird deshalb Luft über die Ansaugöffnungen (Pfeil D) in der Stirnseite des Motorgehäuses 8 in dieses eingesaugt und strömt an dem Antriebsmotor 6 vorbei. Die Ansaugluft gelangt dann über die Durchströmkanäle 25, 26 (Pfeil E) zur Saugseite des Radialgebläses 14 (Pfeil F) und strömt dort in den Kühlkörper 21 (vgl. Figuren 3 und 4) ein. Im Betrieb wird die durch den Antriebsmotor 6 erzeugte Wärme von der vorbeiströmenden Ansaugluft aufgenommen. Hierdurch werden der Antriebsmotor 6 gekühlt und die Ansaugluft aufgewärmt.

Das Griffgehäuse 9 hat auf der linken Seite einen hier nicht näher dargestellten Lufteinlaß, über die von außen zusätzliche Ansaugluft (Pfeil G) parallel zu der Ansaugluft über das Motorgehäuse 8 in den Kühlkörper 21 angesaugt und dort erwärmt wird. Durch die Vorwärmung der Ansaugluft einerseits an dem Antriebsmotor 6 und andererseits an dem Kühlkörper 21 hat die an dem Ausgang 18 in das Luftheizrohr 19 ausströmende Luft eine erhöhte Temperatur, so daß das darin enthaltende Heizelement entsprechend geringere Heizleistungen aufzubringen braucht, um die Lufttemperatur auf einen vorbestimmten Wert zu bringen.

Auf der Oberseite des Griffgehäuses 9 sind - was hier nicht näher dargestellt ist - weitere Bedienungselemente in Form einer Folientastatur sowie Displays für die Anzeige beispielsweise von Temperaturen und Drehzahl eingelassen.

Die Handhabung des Handschweißgerätes 1 geschieht in der Weise, daß es mit der einen Hand an dem Motorgehäuse 8 unterstützt wird, indem das Motorgehäuse 8 von unten gegriffenen wird, und mit der anderen Hand der Griff 11 umfaßt wird. Auf diese Weise ist das Handschweißgerät 1 präzise und bequem handhabbar. Durch die Unterbringung der Elektronikkomponenten 23 und des Radialgebläses 14 in dem Griffgehäuse 9 ist das Handschweißgerät 1 außerordentlich kompakt und läßt einen freien Blick auf die Schweißstelle zu.

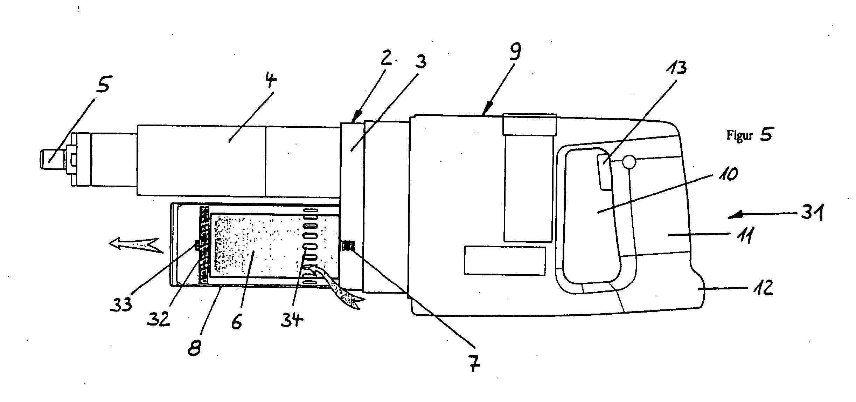

In Figur 5 ist ein Handschweißgerät 31 in der linken Seitenansicht dargestellt, dessen Teile, soweit sie mit dem Handschweißgerät 1 gemäß den Figuren 1 und 2 übereinstimmen, mit den selben Bezugsziffern versehen sind. Zur Beschreibung der mit diesen Bezugsziffern versehenen Teile wird auf die Beschreibung des Handschweißgerätes 1 Bezug genommen.

Das Handschweißgerät 31 unterscheidet sich von dem Handschweißgerät 1 gemäß den Figuren 1 und 2 lediglich dadurch, daß auf der der Abtriebsseite abgewandten, vorderen Seite des Antriebsmotors 6 ein Axialgebläserad 32 auf die nach vorn herausragende Welle 33 des Antriebsmotors 6 aufgesetzt ist und daß das Motorgehäuse 8 im Bereich nahe des Getriebes 2 Lufteinlaßschlitze - beispielhaft mit 34 bezeichnet - aufweist. Im Betrieb saugt das Axialgebläserad 32 über die Lufteinlaßschlitze 34 Luft an, die dann an dem Antriebsmotor 6 kühlend vorbeistreicht und über die an der Stirnseite des Motorgehäuses 8 vorhandenen Schlitze - bei dem Handschweißgerät 1 dienen sie als Lufteinlaß - ausgestoßen wird. Bei dieser Ausführungsform hat das Motorgehäuse 8 keine Verbindung zum Innenraum des Griffgehäuses 9 und damit zu dem Radialgebläse 14.

Denkbar ist jedoch, daß das Axialgebläserad 32 in umgekehrter Richtung fördert, so daß Luft über die Schlitze an der Stirnseite des Motorgehäuses 8 angesaugt und über die Schlitze 34 ausgestoßen wird. Ebenso denkbar ist es, die Lufteinlaßschlitze 34 wegzulassen und eine Verbindung zu dem Innenraum des Griffgehäuses 9 in der Weise zu schaffen, wie bei dem Handschweißgerät 1 gemäß den Figuren 1 und 2. In diesem Fall würde das Axialgebläserad 32 das Radialgebläse 14 unterstützen und für eine noch intensivere Kühlung des Elektromotors 6 sorgen.

## Patentansprüche

1. Handschweißgerät (1, 31) zum Verschweißen von Kunststoffwerkstücken mittels plastifizierten Kunststoffmaterial, mit einer Fördereinrichtung zur Förderung des Kunststoffmaterials durch eine Plastifiziereinrichtung (4) zu einem Schweißschuh (5), wobei die Fördereinrichtung von einem elektrischen Antriebsmotor (6) über ein Getriebe (2) angetrieben ist, **dadurch gekennzeichnet, daß** der Antriebsmotor (6) innerhalb eines Motorgehäuses (8) unterhalb der Plastifiziereinrichtung (4) angeordnet ist.

2. Handschweißgerät nach Anspruch 1, **dadurch gekennzeichnet, daß** das Motorgehäuse (8) keine direkte Berührung mit der Plastifiziereinrichtung (4) hat.

3. Handschweißgerät nach Anspruch 1 oder 2, **dadurch gekennzeichnet, daß** das Motorgehäuse (8) wenigstens untenseitig gerundet ist.

4. Handschweißgerät nach Anspruch 3, **dadurch gekennzeichnet, daß** das Motorgehäuse (8) zumindest halbzylindrische Formgebung hat.

5. Handschweißgerät nach einem der Ansprüche 1 bis 4, **dadurch gekennzeichnet, daß** sich die Längsachse des Antriebsmotors (6) parallel zur Förderrichtung in der Plastifiziereinrichtung (4) erstreckt.

6. Handschweißgerät nach einem der Ansprüche 1 bis 5, **dadurch gekennzeichnet, daß** das Motorgehäuse (8) außenseitig eine die Griffigkeit verbessernde Oberflächenstrukturierung und/oder -beschichtung aufweist.

7. Handschweißgerät nach einem der Ansprüche 1 bis 6, **dadurch gekennzeichnet, daß** der Antriebsmotor (6) mit seinem rückwärtigen, abtriebsseitigen Ende an dem Getriebe (2) angeflanscht ist.

8. Handschweißgerät nach einem der Ansprüche 1 bis 7, **dadurch gekennzeichnet, daß** das Getriebe (2) ein Getriebegehäuse (3) aufweist, an dessen Vorderseite die Plastifiziereinrichtung (4) und der Antriebsmotor (6) mit Motorgehäuse (8) und an dessen Rückseite ein Griffgehäuse (9) mit einem Handgriff (11) angebracht sind.

9. Handschweißgerät nach Anspruch 8, **dadurch gekennzeichnet, daß** der Handgriff (11) an der Rückseite des Griffgehäuses (9) ausgebildet ist.

10. Handschweißgerät nach Anspruch 9, **dadurch gekennzeichnet, daß** der Handgriff (11) oben- und untenseitig unter Bildung einer geschlossenen Grifföffnung (10) eingefaßt ist.

11. Handschweißgerät nach Anspruch 10, **dadurch gekennzeichnet, daß** der Handgriff ein in die Grifföffnung (10) vorstehendes Schaltelement (13) für das Ein- und Ausschalten das Antriebsmotors (6) aufweist.

12. Handschweißgerät nach einem der Ansprüche 8 bis 11, **dadurch gekennzeichnet, daß** in dem Griffgehäuse (9) Komponenten zur Steuerung und/oder Regelung des Handschweißgeräts (1, 31) angeordnet sind.

13. Handschweißgerät nach einem der Ansprüche 8 bis 12, **dadurch gekennzeichnet, daß** das Griffgehäuse (9) eine Tastatur zur Bedienung des Handschweißgeräts (1, 31) aufweist.

14. Handschweißgerät nach Anspruch 13, **dadurch gekennzeichnet, daß** die Tastatur an der Oberseite des Griffgehäuses (9) angeordnet ist.

15. Handschweißgerät nach Anspruch 13 oder 14, **dadurch gekennzeichnet, daß** die Tastatur als Folientastatur ausgebildet ist.

16. Handschweißgerät nach einem der Ansprüche 8 bis 15, **dadurch gekennzeichnet, daß** das Handschweißgerät (1, 31) eine Heißlufterzeugungseinrichtung (14, 19) mit einem Gebläse (14) aufweist, wobei das Gebläse (14) dem Griffgehäuse (9) zugeordnet ist.

17. Handschweißgerät nach Anspruch 16, **dadurch gekennzeichnet, daß** das Gebläse als Radialgebläse (14) mit einer sich quer zur Längsachse des Handschweißgeräts (1, 31) erstreckenden Drehachse ausgebildet ist.

18. Handschweißgerät nach Anspruch 16 oder 17, **dadurch gekennzeichnet, daß** das Gebläse (14) mit seiner Saugseite Verbindung zum Innenraum des Motorgehäuses (8) hat und das Motorgehäuse derart mit Lufteinlaßöffnungen versehen ist, daß Ansaugluft für das Gebläse (14) an dem Antriebsmotor (6) vorbeiströmt.

19. Handschweißgerät nach Anspruch 18, **dadurch gekennzeichnet, daß** die Ansaugluft das Getriebe (2) durchsetzt.

20. Handschweißgerät nach wenigsten den Ansprüchen 12 und 16, **dadurch gekennzeichnet, daß** die Komponenten (23) an einem Kühlkörper (21) angeordnet sind, der im Betrieb von Ansaugluft des Gebläses (14) durchströmt ist.

21. Handschweißgerät nach einem der Ansprüche 17 bis 20, **dadurch gekennzeichnet, daß** das Gebläse (14) ein Gebläsegehäuse (15) aufweist, das von dem Griffgehäuse (9) gebildet ist.

22. Handschweißgerät nach einem der Ansprüche 1 bis 21, **dadurch gekennzeichnet, daß** das Getriebe (2) einen Zahnriementrieb aufweist.

23. Handschweißgerät nach einem der Ansprüche 1 bis 22, **dadurch gekennzeichnet, daß** der Antriebsmotor (6) als bürstenloser Permanentmagnetmotor ausgebildet ist, der über einen Regler drehzahlgesteuert ist.

## Claims

1. A hand-held welding torch (1, 31) for welding synthetic workpieces by means of plasticised synthetic material, having a conveyance device for conveying the synthetic material through a plasticising device (4) to a welding shoe (5), the conveyance device being driven by an electric drive motor (6) via a gear mechanism (2), **characterised in that** the drive motor (6) is disposed within a motor housing (8) beneath the plasticising device (4).

2. The hand-held welding torch according to Claim 1, **characterised in that** the motor housing (8) is not directly in contact with the plasticising device (4).

3. The hand-held welding torch according to Claim 1 or 2, **characterised in that** the motor housing (8) is rounded at least on the lower side.

4. The hand-held welding torch according to Claim 3, **characterised in that** the motor housing (8) has at least a semi-cylindrical shape.

5. The hand-held welding torch according to any of Claims 1 to 4, **characterised in that** the longitudinal axis of the drive motor (6) extends parallel to the conveyance direction within the plasticising device (4).

6. The hand-held welding torch according to any of Claims 1 to 5, **characterised in that** the motor housing (8) has on the outside surface structuring and/or coating improving grip.

7. The hand-held welding torch according to any of Claims 1 to 6, **characterised in that** the drive motor (6) is flange-mounted onto the gear mechanism (2) with its rearward end on the drive side.

8. The hand-held welding torch according to any of Claims 1 to 7, **characterised in that** the gear mechanism (2) has a gear mechanism housing (3) on the front side of which are attached the plasticising device (4) and the drive motor (6) with a motor housing (8), and on the rear side of which is attached a grip housing (9) with a handle (11).

9. The hand-held welding torch according to Claim 8, **characterised in that** the handle (11) is formed on the rear side of the grip housing (9).

10. The hand-held welding torch according to Claim 9, **characterised in that** the handle (11) is enclosed on the upper and on the lower side such as to form a closed grip opening (10).

11. The hand-held welding torch according to Claim 10, **characterised in that** the handle has a switch element (13) for switching the drive motor (6) on and off projecting into the grip opening (10).

12. The hand-held welding torch according to any of Claims 8 to 11, **characterised in that** components for controlling and/or adjusting the hand-held welding torch (1, 31) are disposed in the grip housing (9).

13. The hand-held welding torch according to any of Claims 8 to 12, **characterised in that** the grip housing (9) has a keypad for operating the hand-held welding torch (1, 31).

14. The hand-held welding torch according to Claim 13, **characterised in that** the keypad is disposed on the upper side of the grip housing (9).

15. The hand-held welding torch according to Claim 13 or 14, **characterised in that** the keypad is in the form of a membrane keypad.

16. The hand-held welding torch according to any of Claims 8 to 15, **characterised in that** the hand-held welding torch (1, 31) has a hot air generating device (14, 19) with a blower (14), the blower (14) being assigned to the grip housing (9).

17. The hand-held welding torch according to Claim 16, **characterised in that** the blower is in the form of a radial blower (14) with an axis of rotation extending laterally to the longitudinal axis of the hand-held welding torch (1, 31).

18. The hand-held welding torch according to Claim 16 or 17, **characterised in that** the blower (14) is connected by its suction side to the interior of the motor housing (8), and the motor housing is provided with air inlet openings such that intake air for the blower (14) flows past the drive motor (6).

19. The hand-held welding torch according to Claim 18, **characterised in that** the intake air passes through the gear mechanism (2).

20. The hand-held welding torch according to at least Claims 12 and 16, **characterised in that** the components (23) are disposed on a cooling element (21) through which intake air for the blower (14) passes during operation.

21. The hand-held welding torch according to any of Claims 17 to 20, **characterised in that** the blower (14) has a blower housing (15) which is formed by the grip housing (9).

22. The hand-held welding torch according to any of Claims 1 to 21, **characterised in that** the gear mechanism (2) has a toothed belt drive.

23. The hand-held welding torch according to any of Claims 1 to 22, **characterised in that** the drive motor (6) is in the form of a brush-free permanent magnet motor the motor speed of which is controlled by a regulator.

## Revendications

1. Appareil de soudure manuel (1, 31) pour soudure de produits de matière plastique à l'aide du matériel plastique plastifié, avec un convoyeur pour le co n-voiement de matériel plastique à travers une installation de plastification (4) jusqu'à une chaussure de soudure (5), pendant que le convoyeur est propulsé par un moteur de propulsion électrique (6) par une boîte de vitesses (2), **caractérisée en ce que** le moteur de propulsion (6) est disposé à l'intérieur du logement de moteur (8) sous l'installation de plastification (4).

2. Appareil de soudure manuel selon la revendication 1, **caractérisée en ce que** le logement de moteur (8) n'a pas de contact direct avec l'installation de plastification (4).

3. Appareil de soudure manuel selon les revendications 1 ou 2, **caractérisée en ce que** le logement de moteur (8) est au moins arrondi en dessous.

4. Appareil de soudure manuel selon la revendication 3, **caractérisée en ce que** le logement de moteur (8) a un façonnage au moins semi-cylindrique.

5. Appareil de soudure manuel selon les revendications 1 à 4, **caractérisée en ce que** l'axe longitudinal du moteur de propulsion (6) s'étend parallèlement à la d i-rection de convoiement dans l'installation de plastification (4).

6. Appareil de soudure manuel selon les revendications 1 à 5, **caractérisée en ce que** le logement de moteur (8) a une structuration et/ou un revêtement de surface extérieure améliorant la maniabilité.

7. Appareil de soudure manuel selon les revendications 1 à 6, **caractérisée en ce que** le moteur de propulsion (6), avec sa fin arrière et descendante est fixé par flasques à la boîte de vitesses.

8. Appareil de soudure manuel selon les revendications 1 à 7, **caractérisée en ce que** la boîte de vitesses (2) montre un logement de boîte de vitesses (3), sur lequel sur le côté avant sont installés l'installation de plastification (4) et le moteur de propulsion (6) avec le logement de boîte de vitesses (8) et sur le côté arrière un logement de prise (9) avec une poignée (11).

9. Appareil de soudure manuel selon la revendication 8, **caractérisée en ce que** la poignée (11) est formé sur l'arrière du logement de prise (9).

10. Appareil de soudure manuel selon la revendication 9, **caractérisée en ce que** la poignée (11) est chanfreinée de manière sertie en-haut et en-bas sous la formation d'une ouverture de prise fermée (10).

11. Appareil de soudure manuel selon la revendication 10, **caractérisée en ce que** la poignée a un élément d'enclenchement précédant (13) dans l'ouverture de prise pour la mise en circuit et la mise fors circuit du moteur de propulsion (6).

12. Appareil de soudure manuel selon les revendications 8 à 11, **caractérisée en ce que** dans le logement de prise (9) se trouvent des composantes de conduite et/ou de régulation de l'appareil de soudure manuel (1, 31).

13. Appareil de soudure manuel selon une des revendications 8 à 12, **caractérisée en ce que** le logement de prise (9) a un clavier pour l'utilisation de l'appareil de soudure manuel (1, 31)

14. Appareil de soudure manuel selon la revendication 13, **caractérisée en ce que** le clavier est positionné en-haut du logement de prise (9).

15. Appareil de soudure manuel selon les revendications 13 ou 14, **caractérisée en ce que** le clavier soit configuré comme un clavier de feuille.

16. Appareil de soudure manuel selon les revendications 8 à 15, **caractérisée en ce que** l'appareil de soudure manuel (1, 31) a une installation de production d'air chaud (14, 19) avec une soufflerie (14), où la soufflerie (14) est assignée au logement de prise (9).

17. Appareil de soudure manuel selon la revendication 16, **caractérisée en ce que** la soufflerie est formée comme soufflerie radiale (14) avec un axe rotatif s'étendant en travers de l'axe longitudinale de l'appareil de soudure manuel (1, 31).

18. Appareil de soudure manuel selon les revendications 16 ou 17, **caractérisée en ce que** la soufflerie (14) avec son côté aspirant a une connexion avec l'intérieur du logement de moteur (8) et le logement de moteur est pourvu de telle façon avec des ouvertures de prise d'air, que de l'air d'aspiration pour la soufflerie passe à côté du moteur de propulsion (6).

19. Appareil de soudure manuel selon la revendication 18, **caractérisée en ce que** l'air d'aspiration passe à travers de la boîte de vitesses (2).

20. Appareil de soudure manuel selon les revendications 12 et 16, **caractérisée en ce que** les composantes (23) sont disposés à un corps de refroidissement (21), qui est ventilé par l'air d'aspiration de la soufflerie (14) pendant le fonctionnement.

21. Appareil de soudure manuel selon les revendications 17 à 20, **caractérisée en ce que** la soufflerie (14) a un logement de soufflerie (15), qui est formé du logement de prise (9).

22. Appareil de soudure manuel selon les revendications 1 à 21, **caractérisée en ce que** la boîte de vitesses (2) a une impulsion de courroie crantée.

23. Appareil de soudure manuel selon les revendications 1 à 22, **caractérisée en ce que** le moteur de propulsion (6) est formé en tant que moteur d'aimant permanent, qui est conduit par régime par un régulateur.
